# EUROPEAN PATENT APPLICATION

(11) **EP 2 375 310 A1**
(43) Date of publication of application: **12.10.2011**
(21) Application number: 10159434.9
(22) Date of filing: 08.04.2010
(51) Int. Cl.: G06F 3/01, G06F 3/041

(54) **Tactile feedback for touch-sensitive display**

(71) Applicant: Research in Motion Limited, Waterloo, Ontario N2L 3W8 (CA)
(72) Inventor: Shenfield, Alon, Waterloo Ontario N2L 3X2 (CA); Tong, Kuo-Feng, Waterloo Ontario N2L 3W8 (CA); Grant, Christopher James, Waterloo Ontario N2L 3X2 (CA); Weber, Arnett Ryan, Waterloo Ontario N2L 3W8 (CA)
(74) Representative: Fennell, Gareth Charles

(57) **Abstract**

An electronic device includes a touch-sensitive display, an actuator configured to impart a force on the touch-sensitive display to provide tactile feedback, and a controller configured to detect a touch based on input from the touch-sensitive display and to initiate the tactile feedback by the actuator.

## Description

### FIELD OF TECHNOLOGY

The present disclosure relates to electronic devices, including but not limited to touch-sensitive displays,

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

Improvements in devices with touch-sensitive displays are desirable.

### SUMMARY

An electronic device includes a touch-sensitive, an actuator configured to impart a force on the touch-sensitive display to provide tactile feedback, and a controller configured to detect a touch based on input from the touch-sensitive display and to initiate the tactile feedback by the actuator.

A method includes receiving, at a controller of an electronic device, touch location data from a touch-sensitive display, and initiating, by the controller, tactile feedback by providing an actuation signal to an actuator such that a force is imparted on the touch-sensitive display.

A computer-readable medium has computer-readable code executable by a controller of a portable electronic device to perform the above method.

### BRIEF DESCRIPTION OF THE DRAWINGS

FIG. 1 is a block diagram of a portable electronic device in accordance with the present disclosure.

FIG. 2 illustrates a front view of an example of a portable electronic device in accordance with the present disclosure.

FIG. 3 illustrates a sectional side view of the portable electronic device through the line 202 of FIG 2, in accordance with the present disclosure.

FIG. 4 is a functional block diagram showing components of the portable electronic device in accordance with the present disclosure.

FIG. 5 is a flowchart illustrating a method of controlling an electronic device in accordance with the present disclosure.

FIG. 6 is a sequence diagram illustrating a sequence of communication between a controller and a processor of a electronic device in accordance with the present disclosure.

### DETAILED DESCRIPTION

The following describes an electronic device and method of controlling the electronic device. The electronic device includes a touch-sensitive display, an actuator configured to impart a force on the touch-sensitive display to provide tactile feedback, and a controller configured to detect a touch based on input from the touch-sensitive display and to initiate the tactile feedback by the actuator.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

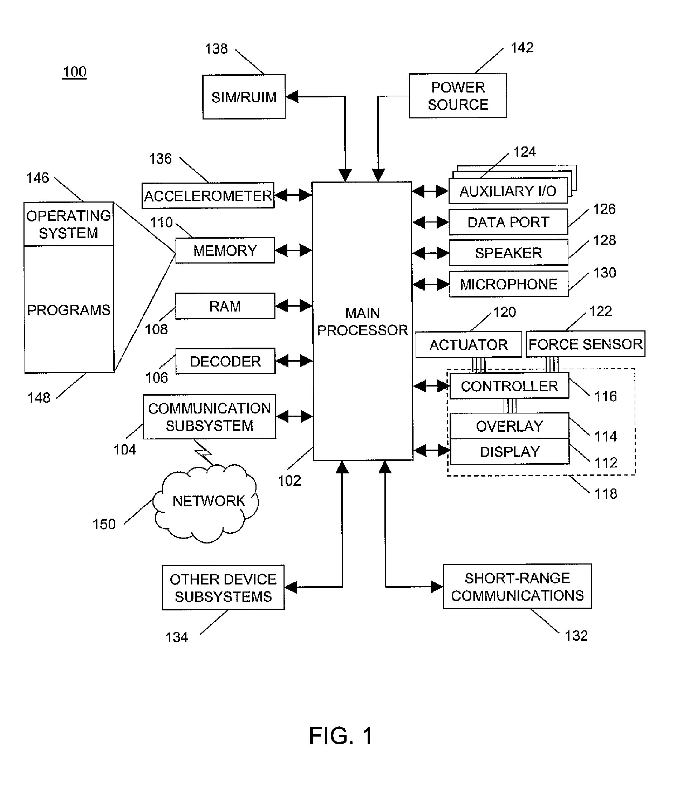

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, a memory 110, a display 112, an electronic controller 116, an auxiliary input/output (I/O) subsystem 124, a data port 126, a speaker 128, a microphone 130, short-range communications 132 and other device subsystems 134. The electronic controller 116 is connected to a touch-sensitive overlay 114, one or more actuators 120, and one or more force sensors 122. The display 112 and the touch-sensitive overlay 114 comprise a touch-sensitive display 118. User-interaction with the graphical user interface is performed through the touch-sensitive overlay 114. The processor 102 receives signals from the electronic controller 116. The electronic controller 116 receives signals from the touch-sensitive overlay 114 and the force sensors 122 and provides actuation signals to the actuators 120.

Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118 and processed by the controller 116, for example, to determine a location of a touch. Touch location data may include a single point of contact, such as a point at or near a center of the area of contact, or the entire area of contact for further processing. The location of a touch detected on the touch-sensitive display 118 may include x and y components, e.g., horizontal and vertical with respect to one's view of the touch-sensitive display 118. For example, the x component may be determined by a signal generated from one touch sensor layer, and the y component may be determined by a signal generated from another touch sensor layer. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The actuator 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 provides the user with tactile feedback.

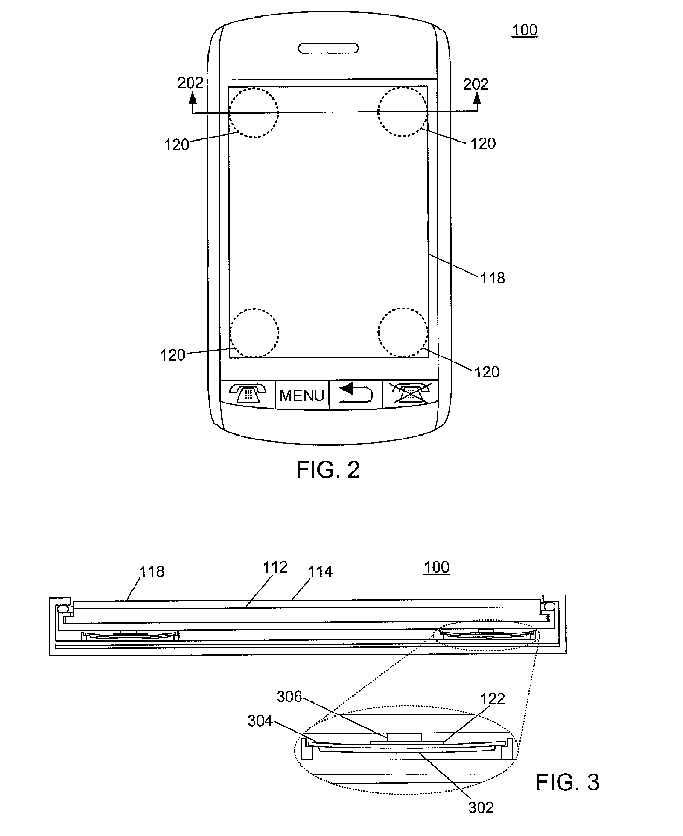

The actuator 120 may comprise one or more piezoelectric (piezo) actuators that provide tactile feedback. FIG. 2 is a front view of an example of a portable electronic device 100. In the example shown in FIG. 2, the actuator 120 comprises four piezo actuators 120, each located near a respective corner of the touch-sensitive display 118. FIG. 3 is a sectional side view of the portable electronic device 100 through the line 202 of FIG 2. Each piezo actuator 120 is supported within the portable electronic device 100 such that contraction of the piezo actuators 120 imparts a force on the touch-sensitive display 118, opposing a force externally applied to the display 118. Each piezo actuator 120 includes a piezoelectric device 302, such as a piezoelectric disk adhered to a substrate 304, such as a metal substrate. An element 306 that is advantageously at least partially flexible and comprises, for example, hard rubber may be located between the piezoelectric device 302 and the touch-sensitive display 118. The element 306 does not substantially dampen the force imparted on the touch-sensitive display 118. In the example shown in FIG. 2 and FIG. 3, the force sensor 122 comprises four force-sensors 122 located between the element 306 and the substrate 304. The force sensors 122 are utilized to determine a value related to the force at each of the force sensors 122 when an external force is applied to the touch-sensitive display 118. The substrate 304 bends when the piezoelectric device 302 contracts diametrically due to build up of charge/voltage across the piezoelectric device 302 or in response to an external force applied to the touch-sensitive display 118. The charge/voltage may be adjusted by varying the applied voltage or current, thereby controlling the force imparted by the piezo actuators 120 on the touch-sensitive display 118. The charge/voltage across the piezo actuators 120 may be removed by a controlled discharge current that causes the piezoelectric devices 302 to expand diametrically, decreasing the force imparted by the piezo actuators 120 on the touch-sensitive display 118. Absent an external force applied to the touch-sensitive display 118 and absent a charge/voltage across the piezoelectric device 302, the piezo actuator 120 may be slightly bent due to a mechanical preload.

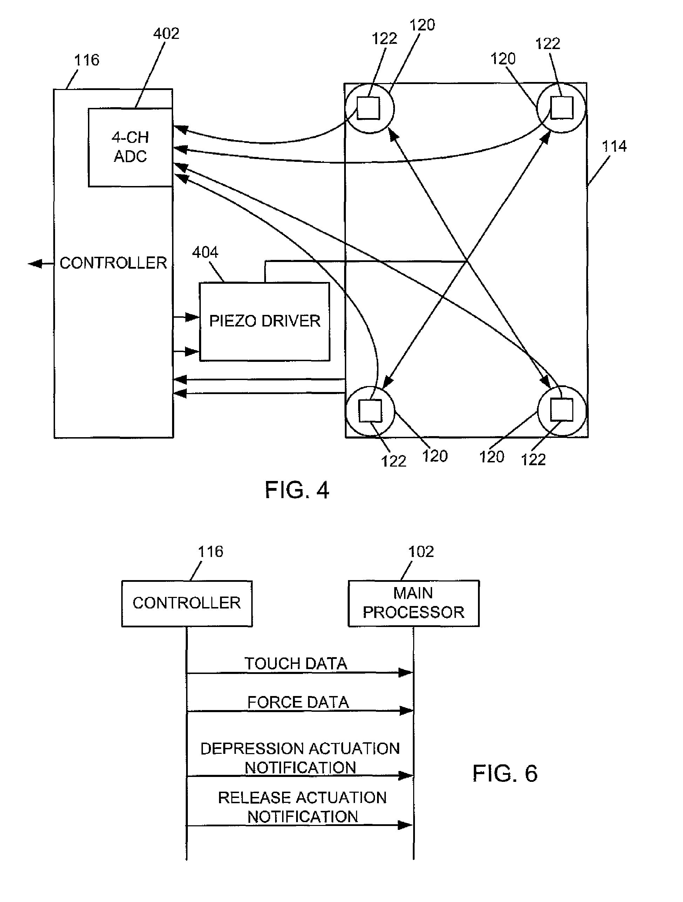

A functional block diagram of components of the portable electronic device 100 is shown in FIG. 4. In this example, each force sensor 122 is connected to the controller 116, which includes an amplifier and analog-to-digital converter (ADC) 402. The force sensors 122 may be, for example, force sensing resistors in an electrical circuit such that the resistance changes with force applied to the force sensors 122. As applied force on the touch-sensitive display 118 increases, the resistance decreases. The force sensors 122 are operably connected to the controller 116 such that the controller 116 receives signals from each of the force sensors 122. A value related to the force applied to the touch-sensitive display 118 is determined. Changes in the value related to the force applied to the touch-sensitive display 118 are determined by the controller 116.

The piezo actuators 120 are connected to a piezo driver 404 that communicates with the controller 116. The controller 116 is also in communication with the main processor 102 of the portable electronic device 100 and may receive and provide signals to and from the main processor 102. The piezo actuators 120 and the force sensors 122 are operatively connected to the main processor 102 via the controller 116. The controller 116 controls the piezo driver 404 that controls the current/voltage to the piezoelectric devices 302 and thus controls the charge/voltage and the force imparted by the piezo actuators 120 on the touch-sensitive display 118. Each of the piezoelectric devices 302 may be controlled substantially equally and concurrently. Optionally, the piezoelectric devices 302 may be controlled separately. In the example described herein, depression and release of a dome switch is simulated through tactile feedback provided by the piezo devices 302. Other switches, actuators, keys, and so forth may be simulated, or a non-simulated tactile feedback may be provided. When a force applied on the touch-sensitive display 118, for example, by a user providing input to the portable electronic device 100, exceeds a depression threshold, the charge/voltage across the piezo actuators 120 is controlled to impart a force on the touch-sensitive display 118 to simulate depression of a dome switch. When the force applied on the touch-sensitive display 118 falls below a release threshold, after providing tactile feedback simulating depression of a dome switch, the charge/voltage across the piezo actuators 120 is controlled to impart a force, by the piezo actuators 120, to simulate release of a dome switch. The value related to the force applied on the touch-sensitive display 118 is determined at the controller 116 and actuation signals are sent from the controller 116 to each of the piezo actuators 120 to provide tactile feedback, for example, that simulates depression and/or release of a dome switch. The controller sends touch location data to the processor 102. Optionally, signals may be sent from the controller 116 to the processor 102 to notify the processor 102 when actuators 120 are actuated. Data traffic along electrical conductors of the portable electronic device 100 is reduced because data transmission from the processor 102 to the controller 116 is unnecessary because the controller controls tactile feedback. Data transmission from the controller 116 to the processor 102 may be reduced to location data and, optionally, actuation notification.

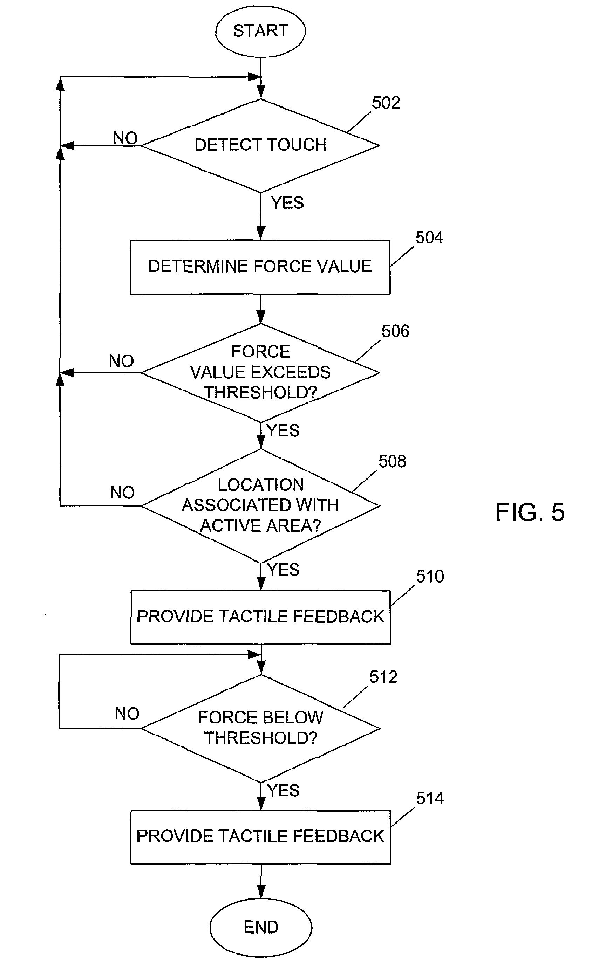

A flowchart illustrating a method of controlling an electronic device 100 having a touch-sensitive display 118 is shown in FIG. 5. The method is advantageously performed by the controller 116 performing stored instructions from a computer-readable medium. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium.

When a touch is detected 502, the location of touch on the touch-sensitive display 118 is determined and sent from the controller 116 to the processor 102. When a force is applied to the touch-sensitive display, the controller 116 may send a force value, e.g., a value related to or representative of the applied force, to the processor 102. A value or values representative of force are determined and mapped to each touch. The controller 116 may determine 504 and map or correlate one or more force values to one or more touches. When the force value is determined 506 to exceed the depression threshold, a determination is made 508 whether or not the touch is located at an active area on the touch-sensitive display 118. An active area is an area on the touch-sensitive display 118 for which tactile feedback is provided when a touch associated with that area is detected. When the touch is associated with the active area, tactile feedback is provided 510 by controlling the charge/voltage across the piezo actuators 120 to simulate depression of a switch and a notification of actuation of the piezo actuators 120 is optionally sent to the processor 102. When the force of the touch on the touch-sensitive display 118 is determined 512 to fall below the release threshold, tactile feedback is provided 514 by controlling the charge/voltage across the piezo actuators 120 to simulate release of a switch and a notification is optionally sent to the processor 102.

A sequence diagram illustrating signals between the controller 116 and the processor 102 of the electronic device is shown in FIG. 6. Signals are sent from the controller 116 to the processor 102. The controller determiners when to provide tactile feedback based on the detection of a touch, applied force values, and touch locations. The location of touch, as determined at the controller 116, is sent to the processor 102. Optionally, force data may also be sent to the processor 102. Notifications may be sent to the processor 102 when the charge/voltage is controlled to provide tactile feedback. The controller 116 determines when to provide tactile feedback and provides signals to actuate the actuators 120. The period of time between the time when the force is applied to the touch-sensitive display 118 and the time when tactile feedback is provided is reduced because transmission of signals is reduced, e.g., due to elimination of signal paths between devices. For example, a signal path may include the controller sending touch data to the processor 102, which interprets the data and sends an actuation signal to the actuators 120. Because the controller analyzes the touch data directly and provides signals to actuate the actuators 120, the need to send the touch data to the processor for analysis before sending actuation signal is eliminated, thereby reducing time to tactile feedback and reducing the communication paths needed before actuating the actuators 120. Signals between the processor and controller are also reduced, resulting in more efficient bus utilization.

The controller is connected to the touch-sensitive overlay of the touch-sensitive display, the actuators and the force sensors. Tactile feedback, for example, that simulates depression of a switch, may be initiated by the controller in response to a determination that an applied force on the touch-sensitive display exceeds the depression threshold. Tactile feedback, for example, that simulates release of a switch, may be provided when the force applied on the touch-sensitive display 118, e.g., by a user, falls below the release threshold. The controller controls the tactile feedback and receives data from the touch-sensitive overlay. Information including touch location data and a notification of the tactile feedback may be provided to a processor of the electronic device. Bus traffic with the processor may be reduced because the controller receives signals from the touch-sensitive display, e.g., a touch-sensitive overlay, and the force sensors and controls the tactile feedback. Latency in providing tactile feedback, for example, may be reduced.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. An electronic device comprising:
a touch-sensitive display;
an actuator configured to impart a force on the touch-sensitive display to provide tactile feedback;
a controller configured to detect a touch based on input from the touch-sensitive overlay and to initiate the tactile feedback by the actuator.

2. The electronic device according to claim 1, comprising at least one force sensor operably coupled to the controller to detect a force applied on the touch-sensitive display.

3. The electronic device according to claim 2, wherein the controller is configured to determine when the force applied on the touch-sensitive display, exceeds a force threshold.

4. The electronic device according to claim 1, wherein the tactile feedback is initiated in response to determining that a force applied on the touch-sensitive display, exceeds a force threshold.

5. The electronic device according to claim 1, comprising a processor arranged and configured to receive touch location data from the controller and to receive a notification of the tactile feedback.

6. The electronic device according to claim 5, wherein the notification of the tactile feedback comprises a notification of a first tactile feedback and notification of a second tactile feedback.

7. The electronic device according to claim 5, wherein the tactile feedback simulates at least one of depression of a switch and release of the switch.

8. The electronic device according to claim 1, wherein the actuator comprises at least one piezoelectric actuator.

9. The electronic device according to claim 8, wherein the controller is configured to control a charge or voltage of the piezoelectric actuator to provide the tactile feedback.

10. A method comprising:
receiving, at a controller of an electronic device, touch location data from a touch-sensitive display;
initiating, by the controller, tactile feedback by providing an actuation signal to an actuator such that a force is imparted on the touch-sensitive display.

11. The method according to claim 10, comprising receiving, at the controller, force data from at least one force sensor to determine a magnitude of a force applied on the touch-sensitive display.

12. The method according to claim 11, comprising determining, at the controller, when the force applied on the touch-sensitive display, exceeds a force threshold.

13. The method according to claim 10, wherein the tactile feedback is initiated in response to determining that a force applied on the touch-sensitive display, exceeds a force threshold.

14. The method according to claim 10, comprising sending a notification of the touch location from the controller to a processor.

15. A computer-readable medium having computer-readable code executable by a controller of a portable electronic device to perform the method of claim 10.

## Amended claims

### Amended claims in accordance with Rule 137(2) EPC.

**1.** An electronic device (100) comprising:
a touch-sensitive display (118);
an actuator (120) configured to impart a force on the touch-sensitive display (118) to provide tactile feedback;
a controller (116) configured to detect a touch based on input from the touch-sensitive display (118) and to initiate the tactile feedback by the actuator.

**2.** The electronic device (100) according to claim 1, comprising at least one force sensor (122) operably coupled to the controller (116) to detect a force applied on the touch-sensitive display (118).

**3.** The electronic device (100) according to claim 2, wherein the controller (116) is configured to determine when the force applied on the touch-sensitive display (118), exceeds a force threshold.

**4.** The electronic device (100) according to claim 1 or claim 2, wherein the tactile feedback is initiated in response to determining that a force applied on the touch-sensitive display (118), exceeds a force threshold.

**5.** The electronic device according to claim 1, comprising a processor (102) arranged and configured to receive touch location data from the controller (116) and to receive a notification of the tactile feedback.

**6.** The electronic device (100) according to claim 5, wherein the notification of the tactile feedback comprises a notification of a first tactile feedback and notification of a second tactile feedback.

**7.** The electronic device (100) according to claim 5, wherein the tactile feedback simulates at least one of depression of a switch and release of the switch.

**8.** The electronic device (100) according to any one of claims 1 to 7, wherein the actuator (120) comprises at least one piezoelectric actuator.

**9.** The electronic device (100) according to claim 8, wherein the controller (116) is configured to control a charge or voltage of the piezoelectric actuator to provide the tactile feedback.

**10.** A method comprising:
receiving, at a controller (116) of an electronic device (100), touch location data from a touch-sensitive display (118);
initiating, by the controller (116), tactile feedback by providing an actuation signal to an actuator (120) such that a force is imparted on the touch-sensitive display.

**11.** The method according to claim 10, comprising receiving, at the controller (116), force data from at least one force sensor (122) to determine a magnitude of a force applied on the touch-sensitive display (118).

**12.** The method according to claim 11, comprising determining, at the controller (116), when the force applied on the touch-sensitive display (118), exceeds a force threshold.

**13.** The method according to claim 10, wherein the tactile feedback is initiated in response to determining that a force applied on the touch-sensitive display (118), exceeds a force threshold.

**14.** The method according to claim 10, comprising sending a notification of the touch location from the controller to a processor.

**15.** A computer-readable medium having computer-readable code executable by a controller (116) of an electronic device (100) to perform the method of any one of claims 10 to 14.
